# EUROPEAN PATENT APPLICATION

(11) **EP 4 625 784 A1**
(43) Date of publication of application: **01.10.2025**
(21) Application number: 25165587.4
(22) Date of filing: 24.03.2025
(51) Int. Cl.: H02K 41/03, H02K 3/50, H02K 5/22

(54) **STATOR ASSEMBLY, LINEAR MOTOR, ELECTROMAGNETIC SUSPENSION, AND VEHICLE**

(30) Priority: 29.03.2024 CN 202410383029
(71) Applicant: BYD Company Limited, Shenzhen, Guangdong 518118 (CN)
(72) Inventor: LIU, Jun, Shenzhen, 518118 (CN); MA, Bingqing, Shenzhen, 518118 (CN); QI, Wenming, Shenzhen, 518118 (CN)
(74) Representative: Mathys & Squire

(57) **Abstract**

The present disclosure discloses a stator assembly, a linear motor, an electromagnetic suspension, and a vehicle. The stator assembly according to the present disclosure includes a mandrel, a stator core, a winding, and an adapter. The mandrel has a central hole. A conductive bar is arranged in the central hole. The stator core is arranged on a periphery of the mandrel. The winding is arranged on the stator core, and a lead-out wire is arranged on the winding. The lead-out wire is located outside the mandrel. A first end of the adapter is located outside the mandrel, and is connected with the lead-out wire. A second end of the adapter runs through a shaft wall of the mandrel and then is connected to the conductive bar. **In** the stator assembly according to the present disclosure, the lead-out wire of the winding is connected to the conductive bar through the adapter, so that a current of a controller can normally flow into the motor. The arrangement of the adapter can improve fitting efficiency of the stator assembly, and enable the stator assembly to be fitted in multiple manners.

## Description

### FIELD

The present disclosure relates to the field of vehicles, and more specifically, to a stator assembly, a linear motor, an electromagnetic suspension, and a vehicle.

### BACKGROUND

A linear motor transmits a signal to a motor stator structure through a controller, to achieve normal operation of the motor. In the related art, the motor controller is usually connected to the stator structure through reserved cables. To be specific, a cable directly runs through a motor mandrel, and electrically connects a conductive bar connected with the controller in the mandrel to the stator structure outside the mandrel, so that the controller can control a movement of the motor stator structure, and therefore the motor can operate normally. However, the reserved cables lead to inconvenience during motor assembly, and the cables arranged inside and outside the mandrel are easy to wear and interfere with other structures of the motor during operation of the motor, resulting in reduced safety.

### SUMMARY

The present disclosure is intended to resolve at least one of technical problems in the related art. Therefore, a purpose of the present disclosure is to provide a stator assembly. In the stator assembly according to the present disclosure, a lead-out wire of a winding is connected to a conductive bar through an adapter, so that a current of a controller can normally flow into a motor. The arrangement of the adapter can improve fitting efficiency of the stator assembly, and enable the stator assembly to be fitted in multiple manners.

The present disclosure further provides a linear motor including the above stator assembly.

The present disclosure further provides an electromagnetic suspension including the above linear motor.

The present disclosure further provides a vehicle including the above electromagnetic suspension.

The stator assembly according to the present disclosure includes a mandrel, a stator core, a winding, and an adapter. The mandrel has a central hole. A conductive bar is arranged in the central hole. The stator core is arranged on a periphery of the mandrel. The winding is arranged on the stator core, and a lead-out wire is arranged on the winding. The lead-out wire is located outside the mandrel. A first end of the adapter is located outside the mandrel, and is connected with the lead-out wire. A second end of the adapter runs through a shaft wall of the mandrel and then is connected to the conductive bar.

The adapter is arranged between the conductive bar and the lead-out wire. After the adapter is fitted, the first end of the adapter is located outside the mandrel, and is connected with the lead-out wire, and the second end of the adapter runs through the shaft wall of the mandrel, then extends into the mandrel, and is connected to the conductive bar. So far, the conductive bar is connected to the lead-out wire through the adapter, and the current of the controller may be transferred to the lead-out wire and finally act on the motor after successively passing through the conductive bar and the adapter. The arrangement of the adapter achieves electrical connection between the conductive bar and the lead-out wire. Different from the connection through reserved cables in the related art, the adapter can prevent problems of exposed and worn cables, and improve safety of the electrical connection between the conductive bar and the lead-out wire. In addition, the fitting in a manner of connecting the conductive bar and the lead-out wire through the adapter is more convenient. Specifically, the two ends of the adapter are respectively located on an inner side and an outer side of the shaft wall. During the fitting, the second end of the adapter may be connected to the conductive bar first, and then the first end may be fixedly connected to the lead-out wire, which facilitates the fitting. In addition, the conductive bar, the mandrel, and the adapter may be made into a whole, and the stator core and the winding may be made into a whole. Then the two parts are fitted, so that the fitting is conveniently and quickly.

According to an embodiment of the present disclosure, a first connection end surface is arranged on an end portion of the lead-out wire. A second connection end surface is arranged on the first end of the adapter. The first connection end surface and the second connection end surface are welded.

According to an embodiment of the present disclosure, the first connection end surface and the second connection end surface are arranged in parallel with an axis of the mandrel.

According to an embodiment of the present disclosure, the adapter includes an extension and a first terminal portion. The extension is a straight-line segment, a curved segment, or a polyline segment extending in a radial direction. The first terminal portion is arranged on a radial outer side of the extension. A section area of the first terminal portion in the radial direction is greater than a section area of the extension. The second connection end surface is formed on a radial outer surface of the first terminal portion.

According to an embodiment of the present disclosure, the adapter further includes a second terminal portion. The second terminal portion is arranged on a radial inner side of the extension. The second terminal portion is configured to extend into the mandrel and connect to the conductive bar. A section area of the second terminal portion is greater than the section area of the extension.

According to an embodiment of the present disclosure, a mating hole adapted to accommodate the second terminal portion is provided on the conductive bar.

According to an embodiment of the present disclosure, a radial inner side surface of the second terminal portion and at least part of a radial inner side surface of the conductive bar are located in a same plane. A radial outer side surface of the second terminal portion and at least part of a radial outer side surface of the conductive bar are located in the same plane.

According to an embodiment of the present disclosure, a periphery of the conductive bar is protected by a plastic member. A notch is provided on the plastic member, to cause the second terminal portion to extend into and connect to the mating hole.

According to an embodiment of the present disclosure, the stator assembly further includes an insulation plate. The insulation plate is arranged on an end portion of the stator core close to the lead-out wire. The extension is attached to the insulation plate.

According to an embodiment of the present disclosure, the lead-out wire includes a body section and a bent section. The bent section is connected with the body section. The bent section extends away from the insulation plate. The body section is attached to the insulation plate.

According to an embodiment of the present disclosure, an end of the bent section away from the insulation plate is flush with an end of the first terminal portion away from the insulation plate.

According to an embodiment of the present disclosure, a limiting plate adapted to abut against the insulation plate is formed on the mandrel. An adapter mounting channel extending into the mandrel along the radial direction is formed on the limiting plate. The adapter runs through the adapter mounting channel, and connects the lead-out wire to the conductive bar.

According to an embodiment of the present disclosure, the limiting plate includes multiple limiting sub-plates arranged at intervals in a circumferential direction of the mandrel. The adapter mounting channel is provided between two adjacent limiting sub-plates.

According to an embodiment of the present disclosure, multiple stator cores are stacked in an axial direction of the mandrel. A winding mounting groove is provided between two adjacent stator cores. A first winding, a second winding, and a third winding are arranged on the winding. The first winding, the second winding, and the third winding are respectively arranged at intervals in the corresponding winding mounting grooves. The lead-out wire includes a first lead-out wire row, a second lead-out wire row, and a third lead-out wire row. The first lead-out wire row extends in an axial direction, and is connected with the first winding. The second lead-out wire row extends in the axial direction, and is connected with the second winding. The third lead-out wire row extends in the axial direction, and is connected with the third winding.

According to an embodiment of the present disclosure, three adapters are arranged, and are respectively connected with the first lead-out wire row, the second lead-out wire row, and the third lead-out wire row.

According to an embodiment of the present disclosure, three wire row grooves adapted to extend in the axial direction and arranged at intervals in a circumferential direction are formed on a periphery of the stator core. The three wire row grooves are used for respectively accommodating the first lead-out wire row, the second lead-out wire row, and the third lead-out wire row.

The linear motor according to the present disclosure is briefly described below.

The linear motor according to the present disclosure includes the stator assembly in the above embodiment. Since the stator assembly in the above embodiment is arranged on the linear motor according to the present disclosure, the stator assembly is connected to a circuit between the conductive bar and the winding through the adapter, so that a current of a controller of the linear motor can be normally inputted into the linear motor. The connection manner of the adapter can reduce difficulty in fitting and electrical connection between the stator structure and the mandrel in the linear motor, improve assembly efficiency, and facilitate subsequent operations such as maintenance and dismounting. In addition, the stator assembly is simple and safe in structure, which can enable the linear motor to operate more reliably with fewer components.

The electromagnetic suspension according to the present disclosure is briefly described below.

The electromagnetic suspension according to the present disclosure includes the linear motor in the above embodiment. Since the linear motor in the above embodiment is arranged on the electromagnetic suspension according to the present disclosure, assembly efficiency of the electromagnetic suspension can be improved after the linear motor is fitted to the electromagnetic suspension. In addition, the arrangement of the linear motor can improve a response rate of the electromagnetic suspension, so that the electromagnetic suspension has a higher integration degree, fewer components, and lower manufacturing costs.

The vehicle according to the present disclosure is briefly described below.

The vehicle according to the present disclosure includes the electromagnetic suspension in the above embodiment. Since the electromagnetic suspension in the above embodiment is arranged on the vehicle according to the present disclosure, the electromagnetic suspension can respond quickly after the electromagnetic suspension is fitted to the vehicle, which improves a damping effect of the vehicle. In addition, since the stator assembly can seal welding points, the linear motor inside the electromagnetic suspension has higher overall structural strength, and better insulation of the motor. Therefore, the arrangement of the electromagnetic suspension can further improve safety of the vehicle.

Part of additional aspects and advantages of the present disclosure is provided in the following description. The part becomes apparent from the following description, or is learned through practice of the present disclosure.

### BRIEF DESCRIPTION OF THE DRAWINGS

The above and/or additional aspects and advantages of the present disclosure become apparent and comprehensible from description of embodiments provided with reference to the following drawings.
FIG. 1 is a cross-sectional view of a linear motor according to an embodiment of the present disclosure;
FIG. 2 is a structural diagram of a linear motor according to an embodiment of the present disclosure;
FIG. 3 is a schematic diagram of a linear motor before potting according to an embodiment of the present disclosure;
FIG. 4 is a schematic diagram of a linear motor after potting according to an embodiment of the present disclosure;
FIG. 5 is a partial enlarged view of A circled in FIG. 2;
FIG. 6 is a schematic diagram of mating between a first terminal portion and a lead-out wire in FIG. 5;
FIG. 7 is a fitting diagram of an adapter according to an embodiment of the present disclosure;
FIG. 8 is a structural diagram of an adapter according to an embodiment of the present disclosure;
FIG. 9 is a top view of an adapter according to an embodiment of the present disclosure;
FIG. 10 is a fitting diagram of an adapter and a conductive bar according to an embodiment of the present disclosure;
FIG. 11 is a fitting diagram of a conductive bar and a plastic member according to an embodiment of the present disclosure;
FIG. 12 is a cross-sectional view of a linear motor according to an embodiment of the present disclosure;
FIG. 13 is a schematic diagram of a linear motor according to an embodiment of the present disclosure;
FIG. 14 is a schematic diagram of an electromagnetic suspension according to an embodiment of the present disclosure; and
FIG. 15 is a schematic diagram of a vehicle according to an embodiment of the present disclosure.

In the drawings:
Stator assembly 1;
Mandrel 11, Conductive bar 111, Mating hole 1111, Plastic member 112;
Stator core 12;
Winding 13, Lead-out wire 131, First connection end surface 1311, Body section 1312, Bent section 1313;
Adapter 14, Extension 141, First terminal portion 142, Second connection end surface 1421, Second terminal portion 143;
Insulation plate 15, Limiting plate 16, Adapter mounting channel 161, Winding mounting groove 17, Wire row groove 18;
Linear motor 10, Mover assembly 101, Electromagnetic suspension 20, Vehicle 30.

### DETAILED DESCRIPTION

Embodiments of the present disclosure are described in detail below, and examples of the embodiments are shown in the drawings. Same or similar elements or elements having same or similar functions are represented by same or similar reference numerals throughout the description. The embodiments described below with reference to the drawings are exemplary, and are merely used for explaining the present disclosure, and cannot be construed as a limitation on the present disclosure.

A linear motor transmits a signal to a motor stator structure through a controller, to achieve normal operation of the motor. In the related art, the motor controller is usually connected to the stator structure through reserved cables. To be specific, a cable directly runs through a motor mandrel, and electrically connects a conductive bar connected with the controller in the mandrel to the stator structure outside the mandrel, so that the controller can control a movement of the motor stator structure, and therefore the motor can operate normally. However, the reserved cables lead to inconvenience during motor assembly, and the cables arranged inside and outside the mandrel are easy to wear and interfere with other structures of the motor during operation of the motor, resulting in a poor safety.

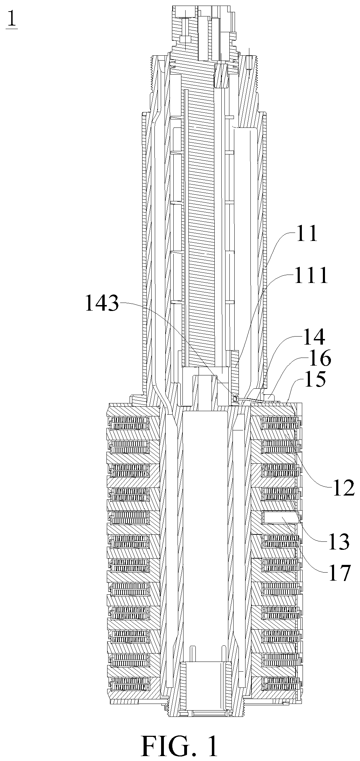

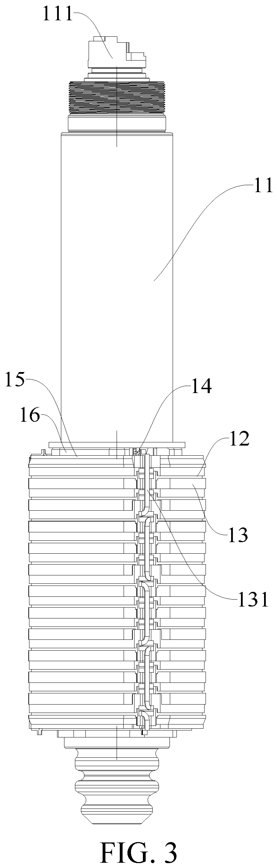

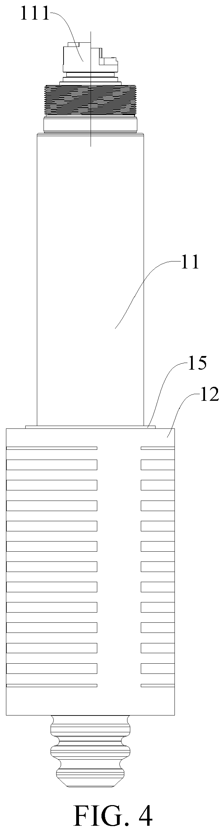

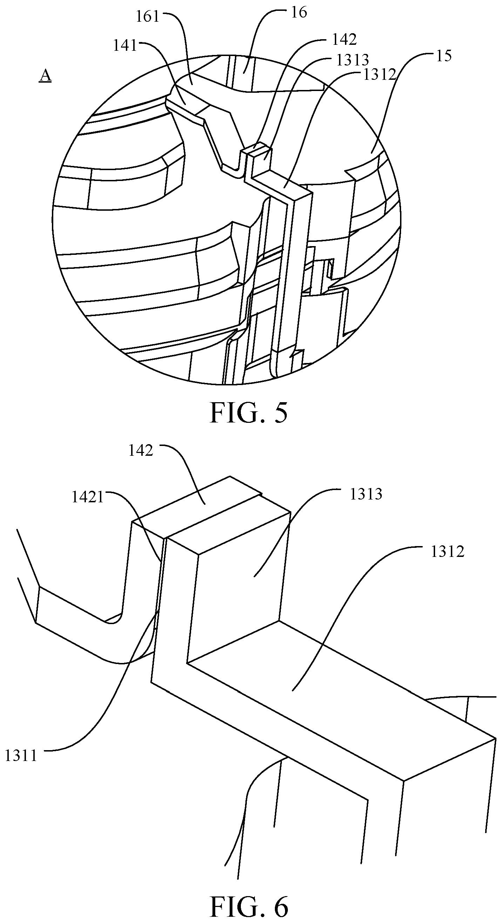

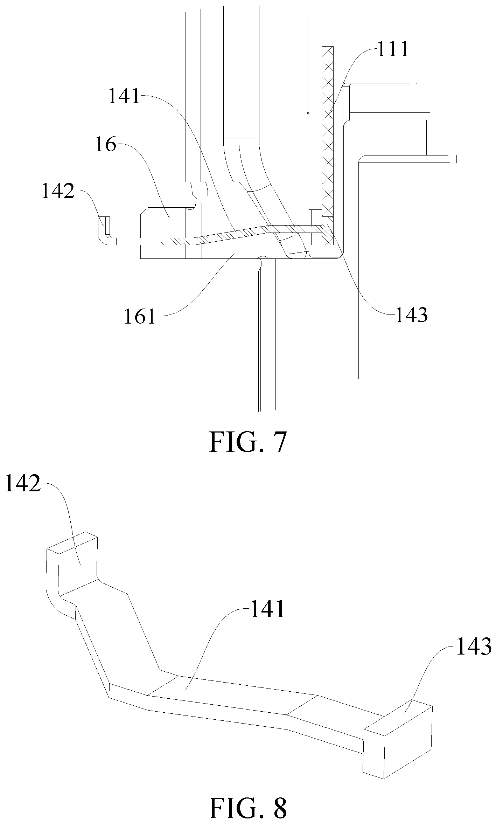

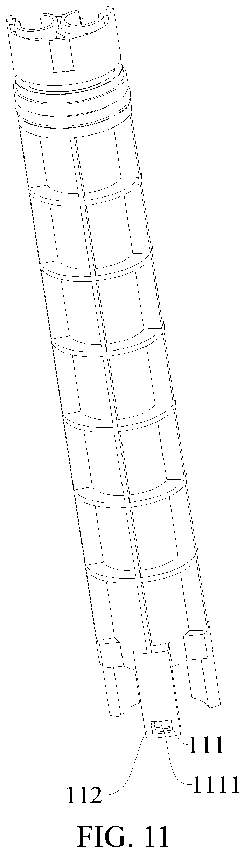

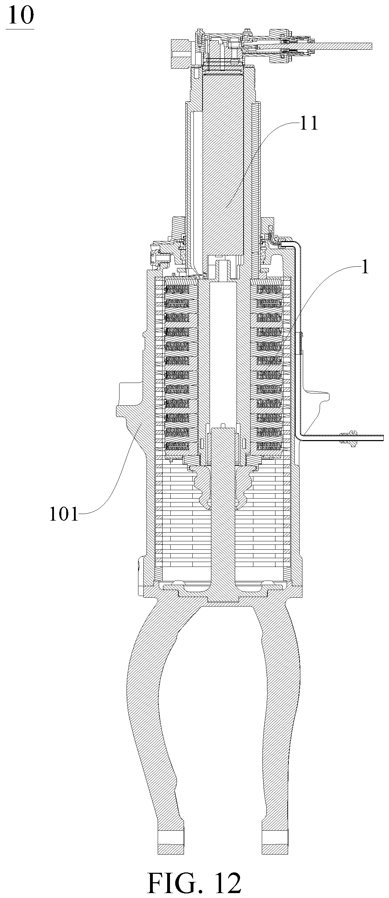

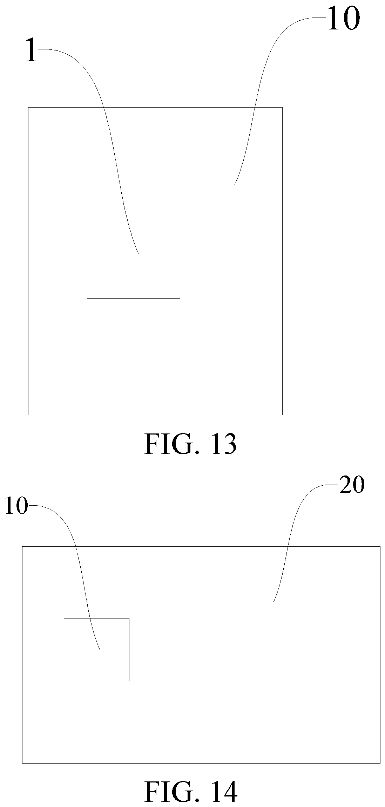

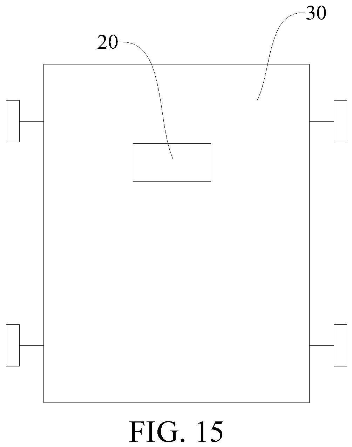

A stator assembly 1 according to an embodiment of the present disclosure is described below with reference to FIG. 1 to FIG. 15.

The stator assembly 1 according to the present disclosure includes a mandrel 11, a stator core 12, a winding 13, and an adapter 14. The mandrel 11 has a central hole A conductive bar 111 is arranged in the central hole. The stator core 12 is arranged on a periphery of the mandrel 11. The winding 13 is arranged on the stator core 12, and a lead-out wire 131 is arranged on the winding. The lead-out wire 131 is located outside the mandrel 11. A first end of the adapter 14 is located outside the mandrel 11, and is connected with the lead-out wire 131. A second end of the adapter 14 runs through a shaft wall of the mandrel 11, and then is connected to the conductive bar 111.

The mandrel 11 is arranged on the stator assembly 1 according to the present disclosure. The central hole is formed in the mandrel 11. A conductive bar 111 electrically connected with a motor controller may be fitted in the central hole. The arrangement of the mandrel 11 can prevent exposure of the conductive bar 111, and improve safety of the conductive bar 111. The stator core 12 covering at least part of the mandrel 11 is arranged on the periphery of the mandrel 11. The winding 13 is wound on the stator core 12. The lead-out wire 131 connected with the winding 13 is arranged on the winding 13. The lead-out wire 131 is configured to electrically connect to the conductive bar 111, so that a current of the controller can be normally inputted into the motor.

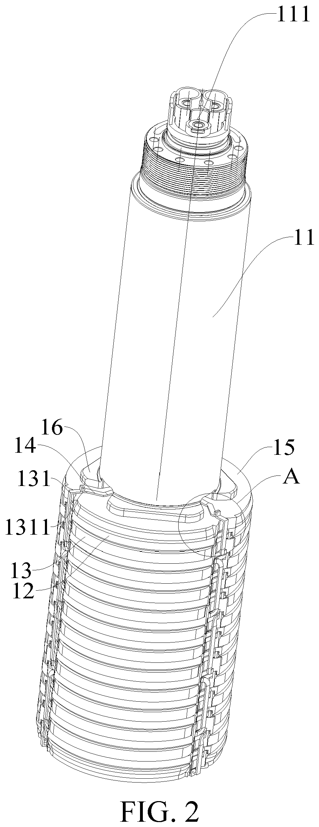

As shown in FIG. 2, the adapter 14 is arranged between the conductive bar 111 and the lead-out wire 131. During fitting of the adapter 14, the first end of the adapter 14 is located outside the mandrel 11, and is connected with the lead-out wire 131, and the second end of the adapter 14 runs through the shaft wall of the mandrel 11, then extends into the mandrel 11, and is connected to the conductive bar 111. So far, the conductive bar 111 is connected to the lead-out wire 131 through the adapter 14, and the current of the controller may be transferred to the lead-out wire 131 and finally act on the motor after successively passing through the conductive bar 111 and the adapter 14. The arrangement of the adapter 14 achieves the electrical connection between the conductive bar 111 and the lead-out wire 131. Different from connection through reserved cables in the related art, the adapter 14 can prevent problems of exposed and worn cable, and improve safety of the electrical connection between the conductive bar 111 and the lead-out wire 131. In addition, the fitting in a manner of connecting the conductive bar 111 and the lead-out wire 131 through the adapter 14 is more convenient. Specifically, the two ends of the adapter 14 are respectively located on an inner side and an outer side of the shaft wall. During the fitting, the second end of the adapter 14 may be connected to the conductive bar 111 first, and then the first end may be fixedly connected to the lead-out wire 131, which facilitates the fitting. In addition, the conductive bar 111, the mandrel 11, and the adapter 14 may be made into a whole, and the stator core 12 and the winding 13 may be made into a whole. Then the two parts are fitted, so that the fitting is conveniently and quickly.

According to an embodiment of the present disclosure, a first connection end surface 1311 is arranged on an end portion of the lead-out wire 131. A second connection end surface 1421 is arranged on the first end of the adapter 14. The first connection end surface 1311 and the second connection end surface 1421 are welded.

Specifically, the first connection end surface 1311 is arranged on the end portion of the lead-out wire 131 connected with the adapter 14. In addition, the second connection end surface 1421 is formed on the first end of the adapter 14. During fitting of the adapter 14, the first connection end surface 1311 may be attached to the second connection end surface 1421, and is fixed through welding or the like. The arrangement of the first connection end surface 1311 and the second connection end surface 1421 can improve stability of the connection between the adapter 14 and the lead-out wire 131.

According to an embodiment of the present disclosure, the first connection end surface 1311 and the second connection end surface 1421 are arranged in parallel with an axis of the mandrel 11. It should be noted that, when the adapter 14 is fitted to the lead-out wire 131, that is, when the first connection end surface 1311 and the second connection end surface 1421 are attached and welded, the first connection end surface 1311 and the second connection end surface 1421 may be maintained in parallel with the axis of the mandrel 11. Since the adapter 14 passes through the shaft wall of the mandrel 11 after the fitting, it may be understood that the adapter 14 extends in a radial direction of the mandrel 11. In this case, the first connection end surface 1311 is parallel to the mandrel 11, which can improve stability of the connection between the lead-out wire 131 and the adapter 14.

According to an embodiment of the present disclosure, the adapter 14 includes an extension 141 and a first terminal portion 142. The extension 141 is a straight-line segment, a curved segment, or a polyline segment extending in a radial direction. The first terminal portion 142 is arranged on a radial outer side of the extension 141. A section area of the first terminal portion 142 in the radial direction is greater than a section area of the extension 141. The second connection end surface 1421 is formed on a radial outer surface of the first terminal portion 142.

Specifically, the extension 141 and the first terminal portion 142 are arranged on the adapter 14. The extension 141 passes through the shaft wall of the mandrel 11, and extends in the radial direction. The extension 141 may be reasonably arranged as one or a combination of the straight-line segment, the curved segment, and the polyline segment according to a fitting position. For example, when another structure of the motor is fitted to the arrangement position of the extension 141, the extension 141 may avoid another structure in the form of the curved segment. When the position at which the extension 141 passes through the shaft wall of the mandrel 11 is misaligned with the first connection end surface 1311 of the lead-out wire 131 in a circumferential direction, the extension 141 may adopt the form of the polyline segment, so that the second connection end surface 1421 can be attached to the first connection end surface 1311. The extending design solution enables the extension 141 to adapt to different types of motors or mounting solutions for different cases, and has better versatility.

The first terminal portion 142 is arranged on the radial outer side of the extension 141, and the second connection end surface 1421 in the above embodiment is formed on the radial outer surface of the first terminal portion 142. The section area of the first terminal portion 142 in the radial direction is greater than the section area of the extension 141. Herein, the section area of the first terminal portion 142 in the radial direction may be understood as an area of the second connection end surface 1421. Therefore, the arrangement of the first terminal portion 142 increases the area of the second connection end surface 1421, that is, a mating area between the adapter 14 and the lead-out wire 131 is increased, which improves stability of the mating between the adapter 14 and the lead-out wire 131.

According to an embodiment of the present disclosure, the adapter 14 further includes a second terminal portion 143. The second terminal portion 143 is arranged a radial inner side of the extension 141. The second terminal portion 143 is configured to extend into the mandrel 11 and connect to the conductive bar 111. A section area of the second terminal portion 143 is greater than the section area of the extension 141. In the adapter 14, the second terminal portion 143 is arranged on the radial inner side of the extension 141. The second terminal portion 143 may be mated with and connected to the conductive bar 111. The connection manner may be a manner such as insertion or surface-to-surface attachment. In addition, the section area of the second terminal portion 143 is greater than the section area of the extension 141. Similar to the first terminal portion 142, the design of the second terminal portion 143 increases the mating area between the adapter 14 and the conductive bar 111, which can improve the stability of the connection between the adapter 14 and the conductive bar 111.

According to an embodiment of the present disclosure, a mating hole 1111 adapted to accommodate the second terminal portion 143 is provided on the conductive bar 111. During fitting, at least part of the second terminal portion 143 extends into the mating hole 1111, and the mating hole 1111 may limit the second terminal portion 143 in an axial direction, which can improve stability of the mating between the second terminal portion 143 and the conductive bar 111. In addition, the mating hole 1111 can provide positioning for the second terminal portion 143 before welding, and strength after welding is higher, to ensure that no air gap exists at a welding line.

According to an embodiment of the present disclosure, a radial inner side surface of the second terminal portion 143 and at least part of a radial inner side surface of the conductive bar 111 are located in a same plane. A radial outer side surface of the second terminal portion 143 and at least part of a radial outer side surface of the conductive bar 111 are located in the same plane.

The second terminal portion 143 and the conductive bar 111 may be mated through surface-to-surface attachment and welding fixation. Specifically, when the at least part of the second terminal portion 143 extends into the mating hole 1111, the radial inner side surface of the second terminal portion 143 may be coplanar with the radial inner side surface of the conductive bar 111, and the radial outer side surface of the second terminal portion 143 may be coplanar with the radial outer side surface of the conductive bar 111. During laser welding, the coplanar state between the second terminal portion 143 and the conductive bar 111 can ensure that a laser beam is incident in a parallel state, and a welding line formed by a contact surface between the second terminal portion 143 and the conductive bar 111 can receive light uniformly. In this way, a welding effect is optimal. In addition, the coplanar requires for a smaller axial size of the mating hole 1111, which reduces a space of an opening required for the mandrel 11.

According to an embodiment of the present disclosure, a periphery of the conductive bar 111 is protected by a plastic member 112. A notch is provided on the plastic member 112, to cause the second terminal portion 143 to extend into and connect to the mating hole 1111. The plastic member 112 covering at least part of the conductive bar 111 may be arranged on the periphery of the conductive bar 111. The plastic member 112 can protect the conductive bar 111, to prevent wear as a result of the conductive bar 111 in contact with another structure in the mandrel 11. In addition, the plastic member 112 can further prevent leakage of the conductive bar 111, which can ensure efficiency of transmitting an electrical signal by the conductive bar 111. The notch is provided on the plastic member 112. At least part of the second terminal portion 143 may extend into the mating hole 1111 through the notch, and be connected to the mating hole 1111, which increases a creepage distance between the conductive bar 111 and the stator core 12.

According to an embodiment of the present disclosure, the stator assembly 1 further includes an insulation plate 15. The insulation plate 15 is arranged on an end portion of the stator core 12 close to the lead-out wire 131. The extension 141 is attached to the insulation plate 15. In the stator assembly 1, the insulation plate 15 is arranged on the end portion of the stator core 12 close to the lead-out wire 131. During the fitting, the insulation plate 15 can abut against the stator core 12, and the extension 141 is attached to a side surface of the insulation plate 15 facing away from the stator core 12. The arrangement of the insulation plate 15 can prevent electrical signal leakage as a result of the extension 141 in directly contact with the stator core 12, and ensure that an electric signal transmitted in the extension 141 can enter the lead-out wire 131, thereby further ensuring that the current of the controller can be normally inputted into the motor.

According to an embodiment of the present disclosure, the lead-out wire 131 includes a body section 1312 and a bent section 1313. The bent section 1313 is connected with the body section 1312. The bent section 1313 extends away from the insulation plate 15. The body section 1312 is attached to the insulation plate 15. Specifically, the body section 1312 attached to the insulation plate 15 is arranged on the lead-out wire 131, and the bent section 1313 extending away from the insulation plate 15 in the axial direction is arranged on an end portion of the body section 1312 close to the adapter 14. The first connection end surface 1311 in the above embodiment is formed on the bent section 1313. The arrangement of the bent section 1313 can increase an area of the first connection end surface 1311, which improves the stability of the connection between the lead-out wire 131 and the adapter 14.

According to an embodiment of the present disclosure, an end of the bent section 1313 away from the insulation plate 15 is flush with an end of the first terminal portion 142 away from the insulation plate 15. The first connection end surface 1311 is formed on the bent section 1313, and the second connection end surface 1421 is formed on the first terminal portion 142. The end of the bent section 1313 away from the insulation plate 15 is flush with the end of the first terminal portion 142 away from the insulation plate 15, which can prevent misalignment when the first connection end surface 1311 is attached to the second connection end surface 1421, and ensure transmission of an electrical signal between the adapter 14 and the lead-out wire 131.

According to an embodiment of the present disclosure, a limiting plate 16 adapted to abut against the insulation plate 15 is formed on the mandrel 11. An adapter mounting channel 161 extending into the mandrel 11 along the radial direction is formed on the limiting plate 16. The adapter 14 runs through the adapter mounting channel 161, and connects the lead-out wire 131 to the conductive bar 111.

As shown in FIG. 2, the limiting plate 16 protruding in the radial direction is arranged on the mandrel 11. The limiting plate 16 may abut against the insulation plate 15 to improve fitting stability of the insulation plate 15, and may axially limit the stator core 12. The adapter mounting channel 161 extending into the mandrel 11 is arranged on the limiting plate 16. In other words, the adapter mounting channel 161 brings inside of the mandrel 11 to be in communication with outside of the mandrel 11. The adapter mounting channel 161 reserves a space for the fitting of the adapter 14. The adapter 14 may enter the inside of the mandrel 11 through the adapter mounting channel 161, and be connected to the conductive bar 111, to achieve the electrical connection between the conductive bar 111 and the lead-out wire 131.

According to an embodiment of the present disclosure, the limiting plate 16 includes multiple limiting sub-plates arranged at intervals in a circumferential direction of the mandrel 11. The adapter mounting channel 161 is provided between two adjacent limiting sub-plates. Specifically, the limiting plate 16 is configured as the multiple limiting sub-plates mated with each other, the multiple limiting sub-plates are arranged at intervals in a circumferential direction of a periphery wall of the mandrel 11, and the adapter mounting channel 161 may be provided between two adjacent limiting sub-plates. At least part of the adapter mounting channel 161 is formed through a gap between the two adjacent limiting sub-plates, which can reduce processing difficulty of the adapter mounting channel 161, and can further ensure structural strength of the mandrel 11.

According to an embodiment of the present disclosure, multiple stator cores 12 are stacked in an axial direction of the mandrel 11. A winding mounting groove 17 is provided between two adjacent stator cores 12. A first winding, a second winding, and a third winding are arranged on the winding 13. The first winding, the second winding, and the third winding are respectively arranged at intervals in the corresponding winding mounting grooves 17. The lead-out wire 131 includes a first lead-out wire row, a second lead-out wire row, and a third lead-out wire row. The first lead-out wire row extends in the axial direction, and is connected with the first winding. The second lead-out wire row extends in the axial direction, and is connected with the second winding. The third lead-out wire row extends in the axial direction, and is connected with the third winding.

Specifically, multiple stator cores 12 are stacked in the axial direction of the mandrel 11, and are sleeved on the periphery of the mandrel 11, and the winding mounting groove 17 used for mounting the winding 13 may be defined by two adjacent stator cores 12. Compared with a solution of directly providing a groove for fitting the winding 13 on a relatively large core, defining the winding mounting groove 17 between the two adjacent stator cores 12 stacked with each other can reduce processing difficulty of the winding mounting groove 17. In addition, the multiple stator cores 12 can define multiple winding mounting grooves 17, and the multiple winding mounting grooves 17 enable the stator assembly 1 to be fitted to multiple windings 13. For example, the first winding, the second winding, and the third winding are arranged on the stator assembly 1, and the first winding, the second winding, and the third winding are respectively arranged in the corresponding winding mounting grooves 17, to prevent mutual interference among three phase windings 13. The arrangement of the three phase windings 13 can utilize a power supply more effectively, reduce an energy loss, and improve efficiency. In addition, after the three phase windings 13 are fitted, the entire stator assembly 1 has specific symmetry at a position of a structure of the stator core 12, so that mounting and maintenance are more convenient.

The lead-out wire 131 includes the first lead-out wire row, the second lead-out wire row, and the third lead-out wire row. The three lead-out wire rows extend in the axial direction. The first lead-out wire row may connect the first winding to the conductive bar 111 through the adapter 14. The second lead-out wire row may connect the second winding to the conductive bar 111 through the adapter 14. The third lead-out wire row may connect the third winding to the conductive bar 111 through the adapter 14. The three conductive bars 111 respectively correspond to three windings, which ensures that each winding can be electrically connected to the conductive bars 111.

According to an embodiment of the present disclosure, three adapters 14 are arranged, and are respectively connected with the first lead-out wire row, the second lead-out wire row, and the third lead-out wire row. Corresponding to the three lead-out wire rows in the above embodiments, the three adapters 14 are also provided, and are connected with the corresponding lead-out wire rows, so that each winding can be electrically connected to the conductive bar 111 through the corresponding adapter 14, which prevents mutual interference among the three lead-out wire rows.

According to an embodiment of the present disclosure, three wire row grooves 18 adapted to extend in the axial direction and arranged at intervals in a circumferential direction are formed on a periphery of the stator core 12. The three wire row grooves 18 are used for respectively accommodating the first lead-out wire row, the second lead-out wire row, and the third lead-out wire row.

Specifically, the three wire row grooves 18 extending in the axial direction on the periphery of the stator core 12 are provided on the stator assembly 1. The three wire row grooves 18 are spaced apart from each other in the circumferential direction, and are in one-to-one correspondence with the three lead-out wire rows. The wire row groove 18 can accommodate the corresponding lead-out wire row, which reserves a space for fitting of the lead-out wire row, and improves fitting stability of the lead-out wire row.

In some embodiments, after the adapter 14 is fitted to the lead-out wire 131 and the conductive bar 111 by welding, potting may be performed on the stator assembly 1 using an adhesive with high dielectric strength and high thermal conductivity, so that welding points of the stator assembly 1 are completely covered by the adhesive, to ensure insulation of the motor.

A linear motor 10 according to the present disclosure is briefly described below.

The linear motor 10 according to the present disclosure includes the stator assembly 1 in the above embodiment. Since the stator assembly 1 in the above embodiment is arranged on the linear motor 10 according to the present disclosure, the stator assembly 1 is connected to a circuit between the conductive bar 111 and the winding 13 through the adapter 14, so that a current of a controller of the linear motor 10 can be normally inputted into the linear motor 10. The connection manner of the adapter 14 can reduce difficulty in fitting and electrical connection between the stator structure and the mandrel 11 in the linear motor 10, improve assembly efficiency, and facilitate subsequent operations such as maintenance and dismounting. In addition, the stator assembly 1 is simple and safe in structure, which can enable the linear motor 10 to operate more reliably with fewer components.

In some embodiments, a mover assembly 101 may be arranged on the linear motor 10. The mover assembly 101 includes an excitation assembly. The winding 13 is coupled to the excitation assembly, to drive the mover assembly 101 to move. Specifically, the mover assembly 101 may be mated with the stator assembly 1. The excitation assembly generally includes an excitation winding 13. The excitation winding is coupled to the winding 13, to be adapted to enable the mover assembly 101 to move relative to the stator assembly 1. In the process, the mover assembly 101 generates heat energy during movement, and the mover assembly 101 also generate heat energy when rubbing against another structure. A cooling channel in the stator assembly 1 may be used for exchange heat with the mover assembly 101, so that another cooling structure does not need to be arranged on the linear motor 10, thereby reducing components required for the linear motor 10, and reducing manufacturing costs of the linear motor 10.

An electromagnetic suspension 20 according to the present disclosure is briefly described below.

The electromagnetic suspension 20 according to the present disclosure includes the linear motor 10 in the above embodiment. Since the linear motor 10 in the above embodiment is arranged on the electromagnetic suspension 20 according to the present disclosure, fitting efficiency of the electromagnetic suspension 20 can be improved after the linear motor 10 is fitted to the electromagnetic suspension 20. In addition, the arrangement of the linear motor 10 can improve a response rate of the electromagnetic suspension 20, so that the electromagnetic suspension 20 has a higher integration degree, fewer components, and lower manufacturing costs.

A vehicle 30 according to the present disclosure is briefly described below.

The vehicle 30 according to the present disclosure includes the electromagnetic suspension 20 in the above embodiment. Since the electromagnetic suspension 20 in the above embodiment is arranged on the vehicle 30 according to the present disclosure, the electromagnetic suspension 20 can respond quickly after the electromagnetic suspension 20 is fitted to the vehicle 30, which improves a damping effect of the vehicle 30. In addition, since the stator assembly 1 can seal welding points, the linear motor 10 inside the electromagnetic suspension 20 has higher overall structural strength, and better insulation of the motor. Therefore, the arrangement of the electromagnetic suspension 20 can further improve safety of the vehicle 30.

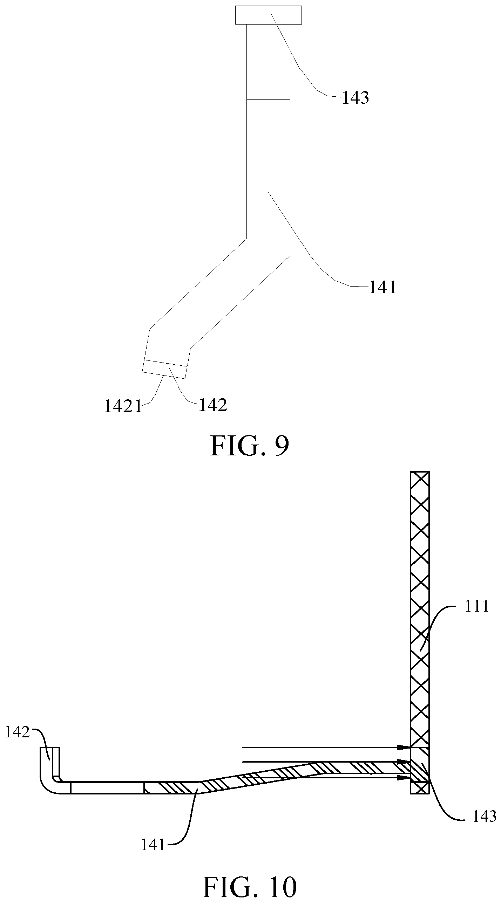

An arrow shown in FIG. 9 merely represents an incident direction of laser during laser welding.

In the description of the present disclosure, it should be understood that orientation or position relationships indicated by terms such as "center", "longitudinal", "transverse", "length", "width", "thickness", "upper", "lower", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, the terms cannot be construed as a limitation on the present disclosure.

In the description of the present disclosure, a "first feature" and a "second feature" may include one or more features.

In the description of the present disclosure, "multiple" means two or more.

In the description of the present disclosure, a first feature being "on" or "under" a second feature may include that the first feature and the second feature are in direct contact, or may include that the first feature and the second feature are not in direct contact, and are in contact using another feature therebetween.

In the description of the present disclosure, the first feature being "over", "above", or "on" the second feature includes that the first feature is directly or obliquely above the second feature, or merely indicates that the first feature is at a higher horizontal position than the second feature.

In the description of the specification, a description provided with reference to terms such as "an embodiment", "some embodiments", "an exemplary embodiment", "an example", "a specific example", or "some examples" means that specific features, structures, materials, or characteristics described with reference to the embodiment or example are included in at least one embodiment or example of the present disclosure. In the specification, exemplary expressions of the above terms do not necessarily mean the same embodiment or example. In addition, the described specific features, structures, materials, or characteristics may be combined in a proper manner in any one or more embodiments or examples.

Although the embodiments of the present disclosure are shown and described, a person of ordinary skill in the art may understand that various changes, modifications, replacements, and variations may be made to the embodiments without departing from the principle and spirit of the present disclosure, and the scope of the present disclosure is defined by the appended claims and their equivalents.

## Claims

1. A stator assembly, comprising:
a mandrel (11), the mandrel (11) having a central hole, and a conductive bar (111) being arranged in the central hole;
a stator core (12), the stator core (12) being arranged on a periphery of the mandrel (11);
a winding (13), the winding (13) being arranged on the stator core (12), the winding having a lead-out wire (131) located outside the mandrel (11); and
an adapter (14), a first end of the adapter (14) being located on of the outer side of the mandrel (11), and being connected with the lead-out wire (131), a second end of the adapter (14) running through a shaft wall of the mandrel (11) and then being connected to the conductive bar (111).

2. The stator assembly (1) according to claim 1, wherein a first connection end surface (1311) is arranged on an end portion of the lead-out wire (131); a second connection end surface (1421) is arranged on the first end of the adapter (14); and the first connection end surface (1311) and the second connection end surface (1421) are welded.

3. The stator assembly (1) according to claim 2, wherein the first connection end surface (1311) and the second connection end surface (1421) are arranged in parallel with an axis of the mandrel (11).

4. The stator assembly (1) according to claim 3, wherein the adapter (14) comprises:
an extension (141), the extension (141) being a straight-line segment, a curved segment, or a polyline segment extending in a radial direction; and
a first terminal portion (142), the first terminal portion (142) being arranged on a radial outer side of the extension (141), a section area of the first terminal portion (142) in the radial direction being greater than a section area of the extension (141), and the second connection end surface (1421) being formed on a radial outer surface of the first terminal portion (142).

5. The stator assembly (1) according to claim 4, wherein the adapter (14) further comprises: a second terminal portion (143), the second terminal portion (143) being arranged on a radial inner side of the extension (141), and the second terminal portion (143) being configured to extend into the mandrel (11) and connect to the conductive bar (111),
wherein a section area of the second terminal portion (143) is greater than the section area of the extension (141).

6. The stator assembly (1) according to claim 5, wherein a mating hole adapted to accommodate the second terminal portion (143) is provided on the conductive bar (111).

7. The stator assembly (1) according to claim 6, wherein a radial inner side surface of the second terminal portion (143) and at least part of a radial inner side surface of the conductive bar (111) are located in a same plane; and/or a radial outer side surface of the second terminal portion (143) and at least part of a radial outer side surface of the conductive bar (111) are located in the same plane.

8. The stator assembly (1) according to claim 6, wherein a periphery of the conductive bar (111) is protected by a plastic member (112); and a notch is provided on the plastic member (112), to cause the second terminal portion (143) to extend into and connect to the mating hole.

9. The stator assembly (1) according to claim 4, further comprising:
an insulation plate (15), the insulation plate (15) being arranged on an end portion of the stator core (12) close to the lead-out wire (131), and the extension (141) being attached to the insulation plate (15).

10. The stator assembly (1) according to claim 9, wherein the lead-out wire (131) comprises a body section (1312) and a bent section (1313), the bent section (1313) being connected with the body section (1312), the bent section (1313) extending away from the insulation plate (15), and the body section (1312) being attached to the insulation plate (15).

11. The stator assembly (1) according to claim 10, wherein an end of the bent section (1313) away from the insulation plate (15) is flush with an end of the first terminal portion (142) away from the insulation plate (15) ,
preferably wherein a limiting plate (16) adapted to abut against the insulation plate (15) is formed on the mandrel (11); an adapter mounting channel (161) extending into the mandrel (11) along the radial direction is formed on the limiting plate (16); and the adapter (14) runs through the adapter mounting channel (161), and connects the lead-out wire (131) to the conductive bar (111),
more preferably wherein the limiting plate (16) comprises a plurality of limiting sub-plates arranged at intervals in a circumferential direction of the mandrel (11); and the adapter mounting channel (161) is provided between two adjacent limiting sub-plates.

12. The stator assembly (1) according to claim 1, wherein a plurality of stator cores (12) are stacked in an axial direction of the mandrel (11); a winding mounting groove (17) is provided between two adjacent stator cores (12);
a first winding, a second winding, and a third winding are arranged on the winding (13); and the first winding, the second winding, and the third winding are respectively arranged at intervals in the corresponding winding mounting grooves (17), wherein
the lead-out wire (131) comprises:
a first lead-out wire row, the first lead-out wire row extending in an axial direction, and being connected with the first winding;
a second lead-out wire row, the second lead-out wire row extending in the axial direction, and being connected with the second winding; and
a third lead-out wire row, the third lead-out wire row extending in the axial direction, and being connected with the third winding,
preferably wherein three adapters (14) are arranged, and are respectively connected with the first lead-out wire row, the second lead-out wire row, and the third lead-out wire row,
more preferably wherein three wire row grooves (18) adapted to extend in the axial direction and arranged at intervals in a circumferential direction are formed on a periphery of the stator core (12); and the three wire row grooves (18) are used for respectively accommodating the first lead-out wire row, the second lead-out wire row, and the third lead-out wire row.

13. A linear motor (10), comprising the stator assembly (1) according to any of claims 1 to 12.

14. An electromagnetic suspension (20), comprising the linear motor (10) according to claim 13.

15. A vehicle (30), comprising the electromagnetic suspension (20) according to claim 14.
